# EUROPÄISCHE PATENTSCHRIFT

(11) **EP 1 004 485 B1**
(45) Veröffentlichungstag und Bekanntmachung des Hinweises auf die Patenterteilung: **10.03.2004**
(21) Anmeldenummer: 99121771.2
(22) Anmeldetag: 03.11.1999
(51) Int. Cl.: B60R 21/32, B60R 21/01

(54) **Verfahren zur Anpassung einer Auslöseschwelle von Insassenschutzrichtungen**
Method for adapting a triggering threshold of a passenger safety device
Procédé pour adapter le seuil de déclenchement d' un dispositif pour la sécurité de passagers

(30) Priorität: 25.11.1998 DE 19854366
(43) Veröffentlichungstag der Anmeldung: 31.05.2000
(73) Patentinhaber: Conti Temic microelectronic GmbH, 90411 Nürnberg (DE)
(72) Erfinder: Bauer, Richard, 85276 Pfaffenhofen (DE); Fendt, Günter, 86529 Schrobenhausen (DE); Steurer, Helmut, 85302 Junkenhofen (DE)

(56) Entgegenhaltungen:
- EP-A- 0 612 643
- DE-A- 4 412 105
- US-A- 5 580 084

## Beschreibung

Die Erfindung betrifft ein Verfahren zur Anpassung einer Auslöseschwelle von Insassenschutzeinrichtungen gemäß dem Oberbegriff des Anspruches 1.

Im Stand der Technik sind Vorrichtungen und Verfahren bekannt, welche sicherheitsrelevante beschleunigungsabhängige Werte, beispielsweise. die aktuelle Beschleunigung, das Beschleunigungsintegral bzw. die Geschwindigkeitsänderung messen. Darüber hinaus sind Vorrichtungen bekannt, welche Insassenschutzeinrichtungen in Abhängigkeit von den gemessenen sicherheitsrelevanten werten auslösen. Dazu werden diese werte mit Schwellwerten zur Auslösung, sogenannten Auslöseschwellen, verglichen.

Darüber hinaus ist dem gattungsgemäßen Stand der Technik, der Patentschrift DE 38 16 591, bereits eine Auslösevorrichtung zu entnehmen, welche einen anpaßbaren Schwellwert aufweist. So wird der Schwellwert an besondere Anfallsituationen in Abhängigkeit von ermittelten Betriebsparametern des Fahrzeugs angepaßt, um die Auslöseempfindlichkeit der Rückhaltemittel zu vergrößern. Als Korrekturgröße des Schwellwertes wird hier in dieser Schrift die Geschwindigkeitsänderung gelehrt. Eine optimale Anpassung ist jedoch bisher nur für neue Kraftfahrzeuge gegeben, da Langzeitversuche zeigen, daß die Fahrzeugkarosseriesteifigkeit bei manchen Fahrzeugtypen über die Lebensdauer bzw. einen entsprechenden Kilometerstand infolge Materialermüdung sich erheblich verändert. So zeigen Versuche, daß zum Teil Auffahrunfälle mit älteren Fahrzeugen nicht zur Auslösung der Insassenschutzeinrichtung führen.

Aufgabe der Erfindung ist es daher, ein Verfahren zur Anpassung einer Auslöseschwelle von Insassenschutzeinrichtungen zu zeigen, welches ein zuverlässiges Ansprechen der Schwellen auch bei älteren Fahrzeugen ermöglicht.

Die Aufgabe ist durch die Merkmale des Patentanspruches 1 gelöst, indem eine automatische Anpassung der Auslöseschwelle in Abhängigkeit der Alters- bzw. Laufdauer bedingten Belastung des Fahrzeuges erfolgt. Die untergeordneten Patentansprüche beschreiben vorteilhafte weiterbildungen der Erfindung. So erweist es sich als besonders vorteilhaft, das zeitliche Fahrzeugalter als Korrekturgröße zu verwenden, da dieses relativ einfach zu ermitteln ist, indem die Differenz aus einem gespeicherten Herstellungszeitpunkt und ermittelten aktuellen Zeitpunktes bestimmt wird. Alternativ oder ergänzend ist die Verwendung eines Betriebsstundenzählers denkbar. Als Korrekturgröße für die Laufdauer bedingte Belastung des Fahrzeuges kann auch der Kilometerstand oder eine Kombination dieser Korrekturgrößen verwendet werden. Die Auslöseschwelle wird mit zunehmender Fahrzeugalterung beim Überschreiten bestimmte Altersstufen stufenweise herabgesetzt. Es erweist sich als besonders vorteilhaft, dieses Verfahren parallel zu anderen Verfahren der Anpassung von Auslöseschwellen für Insassenschutzeinrichtungen zu verwenden.

Die Erfindung soll nachfolgend anhand von Ausführungsbeispielen bezugnehmend auf die Figuren 1 bis 3 näher erläutert werden.
- Figur 1: Blockschaltbild einer Anordnung zur Auslösung von Insassenschutzeinrichtungen mit einer anpassbaren Auslöseschwelle.
- Figur 2: Vergleich des Beschleunigungsverlaufs bei einem neuen und einem alten Fahrzeug
- Figur 3: Vergleich des Geschwindigkeitsverlaufs als Integralwert der Beschleunigung bei einem neuen und einem alten Fahrzeug

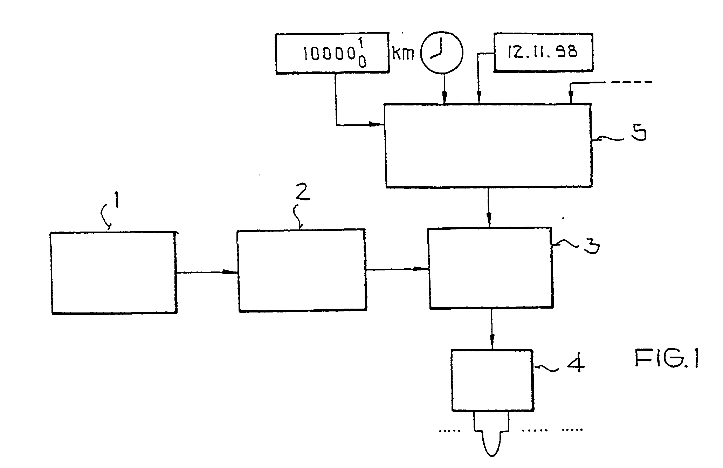

Figur 1 zeigt ein Blockschaltbild einer Anordnung zur Ansteuerung von Insassenschutzeinrichtungen, bestehend aus einer Sensorikeinheit 1, einer Einheit zur Meßwertaufbereitung 2, einer veränderbaren Auslöseschwelle 3 und einer Auslöseeinheit 4 sowie einer Einheit 5 zur Bestimmung der altersund laufdauerbedingten Belastung des Fahrzeuges. Die Sensorik 1 mißt kontinuierlich sicherheitsrelevante beschleunigungsabhängige Werte, beispielsweise mittels eines Beschleunigungssensors. Die Meßwertaufbereitungseinheit 2 verarbeitet die Signale der Sensorik 1 und leitet den aufbereiteten Wert zur Auslöseschwelle 3. Wird die Auslöseschwelle überschritten, erfolgt ein Impuls zur Auslöseeinheit 4 welche ihrerseits die Insassenschutzeinrichtung aktiviert. Um die Auslöseschwellenabhängigkeit von der alters- und laufdauerbedingten Belastung des Fahrzeuges automatisch anpassen zu können, ist eine Einheit zur Bestimmung dieser Belastung vorgesehen, welche eine Korrekturgröße erzeugt, die wiederum automatisch auf die Auslöseschwelle wirkt.

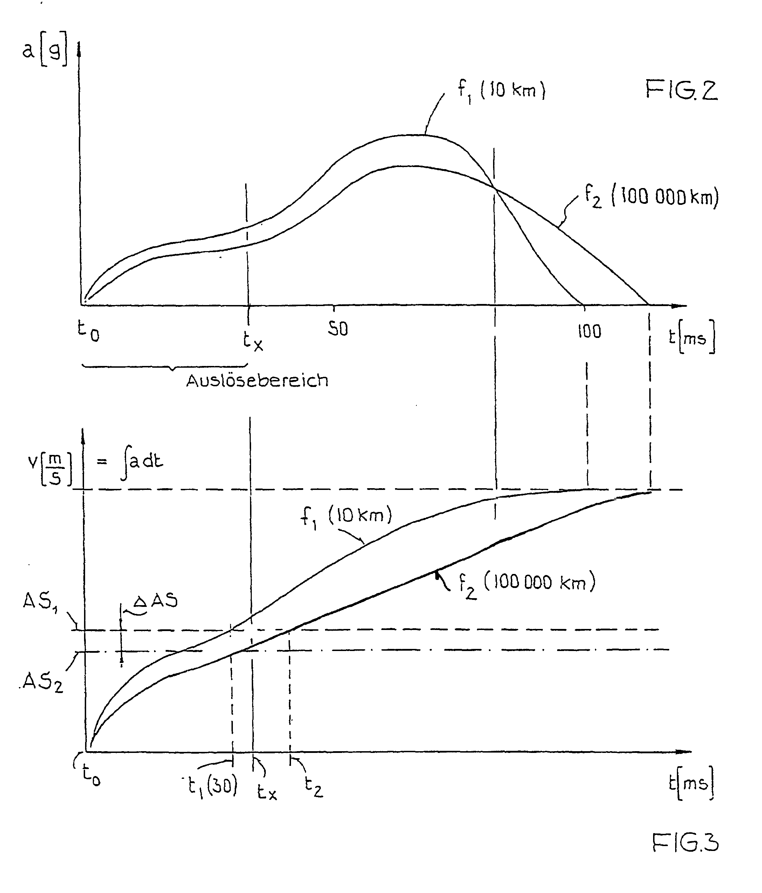

Die Figuren 2 und 3 verdeutlichen die Anpassung der Auslöseschwelle an die alters- und laufdauerbedingte Belastung des Fahrzeuges. So zeigt Figur 2 den zeitlichen Verlauf des aufbereiteten Beschleunigungssignals, Funktion 1 ist dabei charakteristisch für einen frontalen Aufprall mit einer hohen Geschwindigkeit (ca. 80 km pro Stunde) für ein neues Fahrzeug (bspw. 10km gefahren), währenddessen Funktion 2 den Zeitverlauf der Beschleunigungskräfte für ein altes Fahrzeug (100.000 km gefahren) charakterisiert. Figur 3 zeigt dazu das üblicherweise in der Meßwertaufbereitung 2 ermittelte Geschwindigkeitssignal v als Integral über die jeweilige Beschleunigung.

Verändert sich aufgrund der alters- und laufdauerbedingten Belastung des Fahrzeuges dessen Karosseriesteifigkeit, beispielsweise durch Ermüdungserscheinungen von tragenden Teilen oder Lötstellen bzw. Rost, so verändert sich der Beschleunigungs- und damit auch der Geschwindigkeitsverlauf im vorderen zeitbereich, wenngleich letztlich der gleiche Geschwindigkeitsbetrag abgebaut wird. Dieser vordere Zeitbereich ist aber für eine rechtzeitige Auslösung der Insassenschutzeinrichtung entscheidungsrelevant, wie in Figur 3 anhand des spätestmöglichen Auslösezeitpunktes tx zu erkennen. Während bei einem Neufahrzeug (f1) bereits zum Zeitpunkt t1 die für Neufahrzeuge eingestellte Auslöseschwelle AS1 erreicht wird, reagiert der Geschwindigkeitsverlauf bei einem alten Fahrzeug (f2) am Anfang langsamer als bei einem neuen Fahrzeug, so daß bei einer Fahrleistung von über 100.000 km auch im Falle eines Hochgeschwindigkeitsaufpralls bis tx die für Neufahrzeuge eingestellte Auslöseschwelle AS1 nicht erreicht wird und somit keine Insassenschutzeinrichtung aktiviert würden. Es erweist sich daher als äußerst vorteilhaft, die Auslöseschwelle um den Betrag ΔAS auf eine korrigierte Auslöseschwelle AS2 herabzusetzen. Der Betrag ΔAS bzw. die neue Auslöseschwelle AS2 sind dabei so zu wählen, daß damit eine gezielte Auslösung von Insassenschutzeinrichtungen bei Hochgeschwindigkeitsunfällen möglich wird und weiterhin bei Niedergeschwindigkeitsaufprallen eine Auslösung unterdrückt wird. Das hier in Figur 3 skizzenhaft in einer Abstufung gezeigte Verändern der Auslöseschwelle kann selbstverständlich stufenweise mehrfach entsprechend der Laufzeitbelastung erfolgen.

Da eine Vielzahl konstruktionsbedingter Einflußgrößen auf die Veränderung des Crashverhaltens wirken, erscheint es sinnvoll, für jeden Fahrzeugtyp individuelle Abstufungsschritte entsprechend der Fahrzeugbelastung zu definieren und in der Einheit 5 abzulegen. Die Veränderungen des Crashverhaltens sind insbesondere von der Größe und damit der Steifigkeit der Neufahrzeuge abhängig. Beispielsweise durch eine Reihe von Crashversuchen mit langzeitgetesteten Fahrzeugen der Probeserie können Kennlinien über die Veränderung des Crashverhaltens ermittelt und dann als Kennlinien oder ähnliches angelegt werden, um eine automatische Anpassung für die Kundenserienfahrzeuge zu ermöglichen.

Dem Ingenieur stehen dabei zahlreiche Möglichkeiten offen, die alters- und laufdauerbedingte Belastung auch bei Kundenserienfahrzeugen automatisch abzuleiten beziehungsweise abzuschätzen. So können die technischen Besonderheiten des Fahrzeuges, insbesondere bereits vorhandene Einrichtungen, wie z.B. eine elektronische Uhr, ein Betriebsstundenzähler, der gekoppelt mit der Zündung die aktiven Betriebsstunden des Fahrzeugs zählt, oder eine elektronische Kilometerstandsmessung genutzt werden, um daraus die Belastung abschätzen und automatisch den Korrekturbetrag für die Auslöseschwelle abzuleiten zu können, beispielsweise durch eine Schwelle, eine Tabelle oder eine Kennlinienfunktion.

Die Verwendung eines Verfahrens zur Anpassung der Auslöseschwelle in Abhängigkeit von der alters- und laufdauerbedingten Belastung kann parallel zu anderen Verfahren der Anpassung von Auslöseschwellen für Insassenschutzeinrichtungen verwendet werden, beispielsweise parallel zur Herabsetzung der Auslöseschwelle bei Früherkennung eines Unfalls mittels eines Precrashsensors, indem alle verwendeten Auslöseschwellen auch in Abhängigkeit von der alters- und laufdauerbedingten Belastung des Fahrzeuges korrigiert werden.

## Patentansprüche

1. Verfahren zur Anpassung einer Auslöseschwelle (AS) von Insassenschutzeinrichtungen, in Fahrzeugen, wobei die Auslöseschwelle (AS) mit einem beschleunigungsabhängigen Wert (v=∫adt) verglichen und beim überschreiten der Auslöseschwelle (AS) eine bestimmte oder mehrere Insassenschutzeinrichtungen (4) auslöst werden, **dadurch gekennzeichnet, daß** die Auslöseschwelle (AS1, AS2) in Abhängigkeit von der alters- und laufdauerbedingten Belastung des Fahrzeuges korrigiert wird.

2. Verfahren nach Anspruch 1, **dadurch gekennzeichnet, daß**:
a) das zeitliche Fahrzeugalter als Differenz aus einem gespeicherten Herstellungszeitpunkt und einem ermittelten aktuellen Zeitpunkt, und/oder
b) die mittels eines Betriebsstundenzähler ermittelten Betriebsstunden und/oder
c) der Kilometerstand als Korrekturgröße verwandt wird.

3. Verfahren nach einem der obenstehenden Ansprüche, **dadurch gekennzeichnet, daß** die Auslöseschwelle mit zunehmender Fahrzeugalterung bei Überschreiten bestimmter Alterungsstufen stufenweise herabgesetzt wird.

4. Verwendung eines Verfahrens nach einem der voranstehenden Ansprüche parallel zu anderen Verfahren der Anpassung von Auslöseschwellen für Insassenschutzeinrichtungen, indem alle verwendeten Auslöseschwellen in Abhängigkeit von der alters- und laufdauerbedingten Belastung des Fahrzeuges korrigiert werden.

## Claims

1. Method of adapting a trigger threshold (AS) of passenger protection devices in vehicles, wherein the trigger threshold (AS) is compared with an acceleration-dependent value (v=∫adt) and, in the event of the trigger threshold (AS) being exceeded, a specific passenger protection device or a plurality of passenger protection devices (4) are triggered, **characterized in that** the trigger threshold (AS1, AS2) is corrected as a function of the age- and running period-related load of the vehicle.

2. Method according to claim 1, **characterized in that**:
a) the vehicle age in the form of the difference between a stored time of manufacture and a determined actual time and/or
b) the running hours determined by means of an hours-run meter and/or
c) the mileage is used as a correcting quantity.

3. Method according to one of the preceding claims, **characterized in that** with progressive ageing of the vehicle the trigger threshold is reduced step by step when specific ages are exceeded.

4. Use of a method according to one of the preceding claims in parallel with other methods of adapting trigger thresholds for passenger protection devices in that all employed trigger thresholds are corrected as a function of the age- and running period-related load of the vehicle.

## Revendications

1. Procédé pour adapter un seuil de déclenchement (AS) de dispositifs de sécurité pour les passagers dans des véhicules, le seuil de déclenchement (AS) étant comparé à une valeur qui dépend de l'accélération (v = ∫ adt), et un ou plusieurs dispositifs (4) de sécurité pour les passagers étant déclenchés lors du dépassement du seuil de déclenchement (AS), **caractérisé en ce que** le seuil de déclenchement (AS1, AS2) est corrigé en fonction de la sollicitation du véhicule, conditionnée par l'âge et la durée de fonctionnement du véhicule.

2. Procédé selon la revendication 1, **caractérisé par le fait qu'**on utilise:
a) l'âge du véhicule en tant que différence entre un instant mémorisé de fabrication et un instant actuel déterminé, et/ou
b) les heures de fonctionnement déterminées au moyen d'un compteur d'heures de fonctionnement, et/ou
c) le kilométrage en tant que grandeur de correction.

3. Procédé selon l'une des revendications précédentes, **caractérisé en ce que** le seuil de déclenchement est réduit de façon échelonnée lorsque l'âge du véhicule augmente lors du dépassement de niveaux de vieillissement déterminés.

4. Utilisation du procédé selon l'une des revendications précédentes, parallèlement à d'autres procédés pour l'adaptation de seuils de déclenchement pour des dispositifs de sécurité pour passagers, par le fait que tous les seuils de déclenchement utilisés sont corrigés en fonction de la sollicitation, conditionnée par l'âge et la durée de fonctionnement du véhicule.
